# EUROPEAN PATENT APPLICATION

(11) **EP 4 523 972 A1**
(43) Date of publication of application: **19.03.2025**
(21) Application number: 24198404.6
(22) Date of filing: 04.09.2024
(51) Int. Cl.: B60R 16/02

(54) **WIRE HARNESS**

(30) Priority: 13.09.2023 JP 2023148044
(71) Applicant: Yazaki Corporation, Tokyo 108-0075 (JP)
(72) Inventor: Kikuchi, Hideaki, Susono-shi, Shizuoka, 410-1194, (JP); Ogura, Hiroyuki, Susono-shi, Shizuoka, 410-1194, (JP)
(74) Representative: Grünecker Patent- und Rechtsanwälte PartG mbB

(57) **Abstract**

A wire harness (WH) includes a power supply wire (20) that supplies power from a power supply (B2) mounted on a vehicle (V) to a device (D) mounted on the vehicle (V), and a voltage converter (40) that is provided in the power supply wire (20) and converts a voltage of the power supplied from the power supply (B2) to output the resultant. This configuration enables the wire harness (WH) to appropriately supply power to various devices (D) mounted on the vehicle (V).

## Description

### BACKGROUND OF THE INVENTION

### 1. Field of the Invention

The present invention relates to a wire harness.

### 2. Description of the Related Art

For example, Japanese Patent Application Laid-open No. 2016-222085 discloses a wire harness for supplying power to various devices installed in a vehicle. The wire harness includes a power supply wire connected to a single vehicle battery that outputs a predetermined first battery voltage, a power supply control box that receives the first battery voltage via the power supply wire, supplies the received first battery voltage to a first device operating at the first battery voltage, steps down the received first battery voltage to set a second battery voltage lower than the first battery voltage, and supplies the second battery voltage to a second device operating at the second battery voltage, a first supply wire that is provided between the power supply control box and the first device to supply the first battery voltage to the first device, and a second supply wire that is provided between the power supply control box and the second device to supply the second battery voltage to the second device.

Meanwhile, the wire harness achieves power supply to each device under a situation where devices with different operating voltages coexist by integrating, into the power supply control box, a voltage conversion function in addition to fuses, relays, branches, and the like.

However, the wire harness has room for further improvement in terms of arrangement of the voltage conversion function and so on, for example.

### SUMMARY OF THE INVENTION

The present invention has been made in view of the above circumstances, and an object of the present invention is to provide a wire harness capable of appropriately supplying power to various devices mounted on a vehicle.

A wire harness according to one aspect of the invention includes a power supply wire that supplies power from a power supply mounted on a vehicle to a device mounted on the vehicle; and a voltage converter that is provided in the power supply wire and converts a voltage of the power supplied from the power supply to output a resultant.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a schematic block diagram illustrating a schematic configuration of a power supply system to which a wire harness according to an embodiment is applied;
FIG. 2 is a schematic block diagram illustrating a schematic configuration of a vehicle to which a wire harness according to an embodiment is applied;
FIG. 3 is a schematic perspective view illustrating a schematic configuration of a voltage converter of a wire harness according to an embodiment;
FIG. 4 is a schematic perspective view illustrating a schematic configuration of another aspect of a voltage converter of a wire harness according to an embodiment;
FIG. 5 is a schematic perspective view illustrating a schematic configuration of another aspect of a voltage converter of a wire harness according to an embodiment; and
FIG. 6 is a schematic perspective view illustrating a schematic configuration of another aspect of a voltage converter of a wire harness according to an embodiment.

### DETAILED DESCRIPTION OF THE PREFERRED EMBODIMENTS

Hereinafter, an embodiment according to the present invention will be described in detail with reference to the drawings. Note that the present invention is not limited to the embodiment. In addition, constituent elements in the following embodiment include those that can be easily replaced by those skilled in the art or those that are substantially the same.

### Embodiment

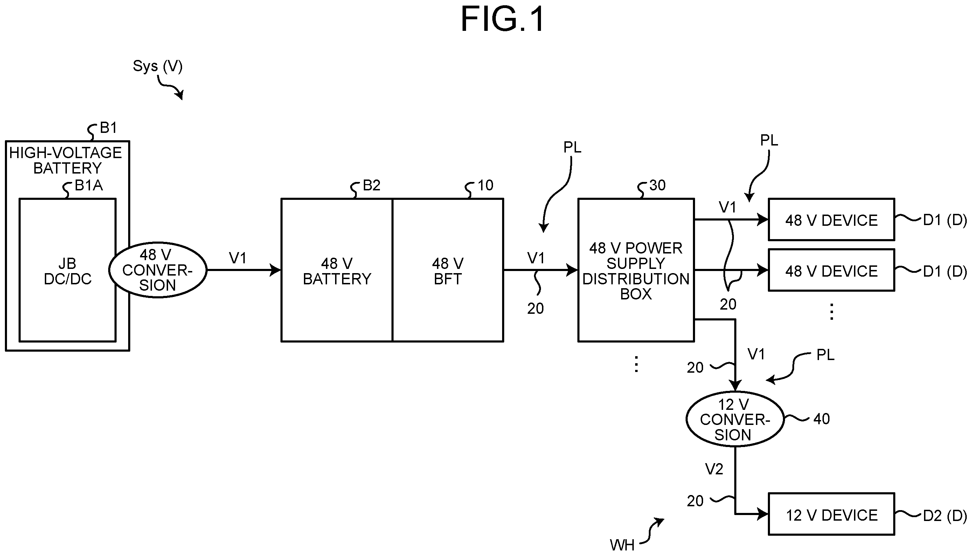

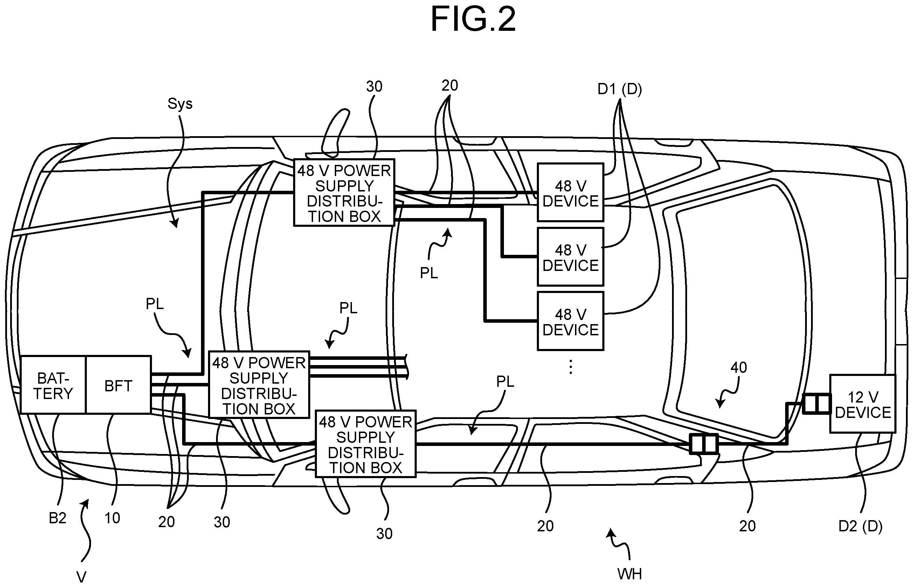

A wire harness WH according to the present embodiment illustrated in FIGS. 1 and 2 is applied to a power supply system Sys mounted on a vehicle V. The power supply system Sys is a system that supplies power to various devices D mounted on the vehicle V. The devices D are load devices that operate and are driven by power supplied from the power supply system Sys to exhibit various functions in the vehicle V. Examples of the device D include a traveling system actuator (motor generator, steering device, braking device, etc.), a body system device (lighting device, air conditioning device, wiper device, electric mirror, electric seat, electric door, etc.), a multimedia system device (navigation device, audio, meter, display, etc.), a detection system device (sensor, camera, radar, etc.), a communication device, and an electronic control unit (electronic control unit, that is, ECU).

In recent years, with the diversification of power supplies in the vehicle V, there is an increasing need to dispose and mount devices D with different drive voltages together in the vehicle V. Under such a circumstance, the power supply system Sys is required to appropriately supply power to a plurality of devices D with different drive voltages.

As described above, the wire harness WH of the present embodiment achieves, in a situation where the devices D with different drive voltages coexist, a configuration in which power can be appropriately supplied to the various devices D mounted on the vehicle V. Hereinafter, each configuration of the wire harness WH and the like will be described in detail with reference to each drawing.

In the following description, it is assumed that the device D is a plurality of devices D with different drive voltages and includes a first device D1 driven at a first voltage V1 and a second device D2 driven at a second voltage V2. The first voltage V1 is, for example, a voltage of 30 V or more and 60 V or less. On the other hand, the second voltage V2 is lower than the first voltage V1, and is for example, higher than 0 V and lower than 30 V. Here, as an example, description will be given on the assumption that the first voltage V1 is "48 V" and the second voltage V2 is "12 V". That is, herein, description will be given on the assumption that the first device D1 is a 48 V drive device driven at a voltage of 48 V, and the second device D2 is a 12 V drive device driven at a voltage of 12 V. In the following description, in a case where it is not necessary to particularly distinguish between the first device D1 and the second device D2, they are sometimes simply referred to as the "device D".

Specifically, as illustrated in FIGS. 1 and 2, the power supply system Sys includes a high-voltage battery B1 and a 48 V battery B2 serving as power supplies, and a wire harness WH that electrically connects these batteries to the devices D. In FIG. 2, illustration of the high-voltage battery B1 is omitted for easy understanding of the drawing.

The high-voltage battery B1 is a battery that stores power at a predetermined high voltage, and is a first power supply capable of supplying power at the predetermined high voltage. The high-voltage battery B1 typically has a voltage higher than that of the 48 V battery B2 and has, for example, a voltage (battery voltage) of about 300 V to 400 V. The high-voltage battery B1 of the present embodiment is electrically connected to the 48 V battery B2 via a DC/DC converter B1A, and supplies power to the 48 V battery B2. The DC/DC converter B1A is a transformer that converts a voltage of DC power. The DC/DC converter B1A is electrically connected to the 48 V battery B2, converts a voltage of power from the high-voltage battery B1 into the first voltage V1, and outputs the first voltage V1 to the 48 V battery B2. Here, the first voltage V1 is "48 V". That is, the DC/DC converter B1A steps down the voltage of the high-voltage battery B1 to a voltage of 48 V corresponding to the first voltage V1, and outputs the resultant to the 48 V battery B2. The high-voltage battery B1 is electrically connected also to a device (not illustrated), and supplies power to the device (not illustrated).

The 48 V battery B2 is a battery that stores power at the first voltage V1 lower than the voltage of the high-voltage battery B1, and is a second power supply capable of supplying power at the first voltage V1. As described above, herein, the first voltage V1 is "48 V". That is, the 48 V battery B2 is a voltage (battery voltage) of about 48 V. The 48 V battery B2 is electrically connected to the high-voltage battery B1 via the DC/DC converter B1A, and can be charged with power supplied from the high-voltage battery B1 via the DC/DC converter B1A. The 48 V battery B2 is not limited to the high-voltage battery B1, and may be charged with power generated by, for example, a 48 V generator (48 V alternator) (not illustrated) or the like. The 48 V battery B2 is electrically connected to each device D via the wire harness WH, and supplies power to each device D via the wire harness WH. The 48 V battery B2 of the present embodiment serves as a power supply that supplies power to both the first device D1 and the second device D2 via the wire harness WH.

The wire harness WH constitutes a power supply system PL that supplies power from the 48 V battery B2, which is the power supply, to each device D. The wire harness WH of the present embodiment has a voltage conversion function of converting the voltage of the power supplied from the 48 V battery B2 into the second voltage V2, which is lower than the first voltage V1, to output the second voltage V2. Thereby, power is appropriately supplied to the first device D1 and the second device D2 with different drive voltages from each other.

Specifically, the wire harness WH of the present embodiment includes a battery fuse terminal (BFT) 10, a power supply wire 20, a 48 V power supply distribution BOX 30, and a voltage converter 40. A voltage conversion function by the voltage converter 40 is added on the power supply wire 20. With this configuration, the wire harness WH of the present embodiment can achieve power distribution to the second device D2 that is the 12 V drive device in addition to power distribution to the first device D1 that is the 48 V drive device, and can perform voltage conversion from the first voltage V1 to the second voltage V2 in the vicinity of the second device D2 to thereby achieve efficient routing.

The BFT 10 is an electronic component unit directly connected to the 48 V battery B2 that is a power supply. The BFT 10 typically has a circuit branch function and a circuit protection function. The BFT 10 is fastened to, for example, an anode of a battery post of the 48 V battery B2 via a battery terminal to thereby be electrically connected to the battery post.

The BFT 10 includes a branch bus bar that implements the circuit branch function and a protector such as a fuse, a fusible link, or a semiconductor relay that implements the circuit protection function. The branch bus bar constitutes a circuit branched according to the number of power supply systems PL branched by the BFT 10. The BFT 10 branches the power supplied from the 48 V battery B2 at the first voltage V1, that is, a voltage of 48 V, into the plurality of power supply systems PL via the branch bus bar. The protector is provided for each of the plurality of power supply systems PL in the BFT 10. When overcurrent flows through the power supply system PL, the protector cuts off the overcurrent to protect the power supply system PL. The overcurrent herein is, for example, current equal to or higher than a preset rating. The rated current is determined according to the current of the circuit to be protected. That is, in a case where the protector is configured with, for example, a fuse element such as a fuse or a fusible link, the protector is fused when current equal to or higher than the preset rating flows to cut off the overcurrent and protect the power supply system PL.

Here, each of the plurality of power supply systems PL branched by the BFT 10 supplies a voltage of 48 V corresponding to the first voltage V1. The BFT 10 is electrically connected to each of the power supply wires 20 constituting each power supply system PL via a connector, a connection terminal, or the like, and outputs the branched power to each of the power supply wires 20. In the wire harness WH of the present embodiment, the voltage converter 40 that implements the voltage conversion function is provided in at least one of the plurality of power supply systems PL branched by the BFT 10.

The power supply wire 20 is a wiring member that is interposed between the 48 V battery B2 as the power supply and the device D to supply the power from the 48 V battery B2 to the device D. That is, the power supply wire 20 is interposed between the BFT 10 and the device D and constitutes the power supply system PL that supplies power to the device D. For example, the plurality of power supply wires 20 is electrically connected to the BFT 10 via connectors, connection terminals, or the like according to the number of power supply systems PL branched in the BFT 10 as described above, and constitute the power supply systems PL. The voltage converter 40 is provided at any part on the power supply wire 20 constituting the power supply system PL. The power supply wire 20 is typically configured with a general electric wire, but may be configured with, for example, a planar circuit body such as a flexible printed circuit (FPC) or a flexible flat cable (FFC) .

The 48 V power supply distribution BOX 30 is interposed between the BFT 10 and the device D, and distributes the power supplied from the 48 V battery B2 to the plurality of devices D. The 48 V power supply distribution BOX 30 is provided on the power supply wire 20 constituting the power supply system PL. The 48 V power supply distribution BOX 30 distributes power output at a voltage of 48 V corresponding to the first voltage V1 from the 48 V battery B2 via the BFT 10 to the plurality of devices D. The 48 V power supply distribution BOX 30 includes electronic components such as a branch portion, a fuse (circuit protector), and a relay, and distributes power to the plurality of devices D in cooperation of these electronic components. The power supply wire 20 branches, on the output side of the 48 V power supply distribution BOX 30, into the number corresponding to the number of devices D to which power is distributed from the 48 V power supply distribution BOX 30. In the example of FIG. 2, a total of three 48 V power supply distribution BOXES 30 are illustrated.

Then, at least one of the 48 V power supply distribution BOXES 30 of the present embodiment distributes power supplied at a voltage of 48 V corresponding to the first voltage V1 from the 48 V battery B2 via the BFT 10 to the plurality of first devices D1 that are the 48 V drive devices, and also distributes a part of the power to the second device D2 side that is the 12 V drive device. In this case, the power distributed from the 48 V power supply distribution BOX 30 to the second device D2 side is converted into the second voltage V2 corresponding to the second device D2, herein, a voltage of 12 V, by the voltage converter 40 provided on the power supply wire 20, and is supplied to the second device D2.

As described above, the voltage converter 40 of the present embodiment is provided in the power supply wire 20 that supplies the power from the 48 V battery B2 to the device D, and the voltage converter 40 converts the voltage of the power supplied from the 48 V battery B2 to output the resultant. Here, the voltage converter 40 is provided, among the power supply wires 20, in the power supply wire 20 constituting the power supply system PL that supplies power from the 48 V battery B2 to the second device D2. The voltage converter 40 is typically configured with a DC/DC converter that converts a voltage of DC power.

More specifically, the voltage converter 40 of the present embodiment converts a voltage of power supplied from the 48 V battery B2 at the first voltage V1 from the first voltage V1 to the second voltage V2 lower than the first voltage V1, and outputs the resultant. That is, here, the voltage converter 40 converts the voltage of the power from the 48 V battery B2 from a voltage of 48 V corresponding to the first voltage V1 to a voltage of 12 V corresponding to the second voltage V2, and outputs the resultant. As a result, the wire harness WH of the present embodiment can also supply power at the second voltage V2 lower than the first voltage V1 in addition to supplying power at the first voltage V1 corresponding to the battery voltage of the 48 V battery B2.

The voltage converter 40 of the present embodiment is provided in the power supply wire 20 that connects the 48 V power supply distribution BOX 30 to the second device D2 in order to perform voltage conversion from the first voltage V1 to the second voltage V2 in the vicinity of the second device D2.

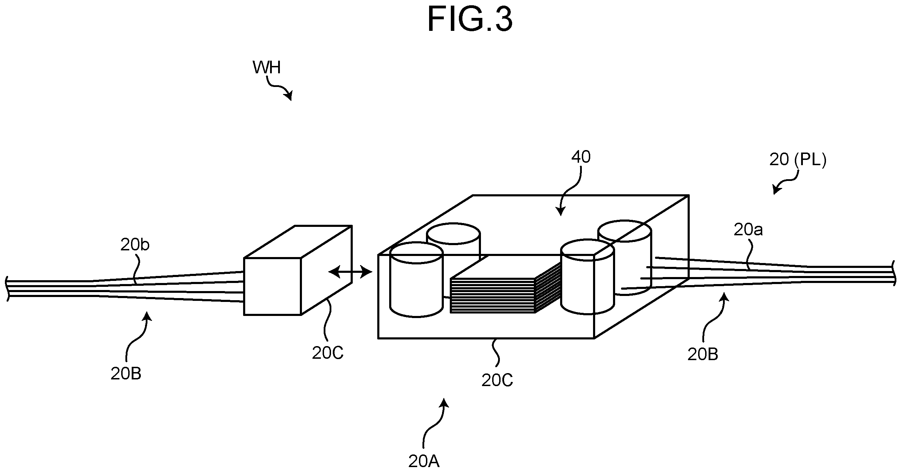

Hereinafter, a plurality of variations of installation modes of the voltage converter 40 with respect to the power supply wire 20 will be described with reference to FIGS. 3, 4, 5, and 6.

### <First Installation Mode>

FIG. 3 illustrates an example of an installation mode in which the voltage converter 40 is provided in a middle part 20A of the power supply wire 20. The voltage converter 40 illustrated in FIG. 3 is provided in the middle part 20A, of the power supply wire 20, located between a terminal on the side of the 48 V battery B2 and the 48 V power supply distribution BOX 30 and a terminal on the second device D2 side. Note that, here, the middle part 20A of the power supply wire 20 typically includes a wide part other than the terminal of the power supply wire 20, and includes, for example, not only the central position in the extending direction of the power supply wire 20 but also a position closer to one of the terminal sides from the central position in the extending direction. More specifically, the power supply wire 20 illustrated in FIG. 3 includes a plurality of electric wires 20B divided in the extending direction and relay connectors 20C that connect the plurality of electric wires 20B to each other. The voltage converter 40 illustrated in FIG. 3 is built in one of the relay connectors 20C. With this configuration, the voltage converter 40 can be provided in the middle part 20A of the power supply wire 20. The voltage converter 40 converts the power supplied at the first voltage V1 via a part 20b on the side of the 48 V battery B2 and the 48 V power supply distribution BOX 30 of the plurality of electric wires 20B divided in the extending direction into the second voltage V2 lower than the first voltage V1, outputs the second voltage V2 to a part 20a on the second device D2 side, and thereby supplies the power at the second voltage V2 to the second device D2.

In this case, in the power supply wire 20, typically, among the plurality of electric wires 20B divided in the extending direction, the part 20a that has a relatively low voltage and is closer to the second device D2 side with respect to the voltage converter 40 is configured to be relatively thick, and the part 20b that has a relatively high voltage and is closer to the side of the 48 V battery B2 and the 48 V power supply distribution BOX 30 with respect to the voltage converter 40 is configured to be relatively thin.

### <Second Installation Mode>

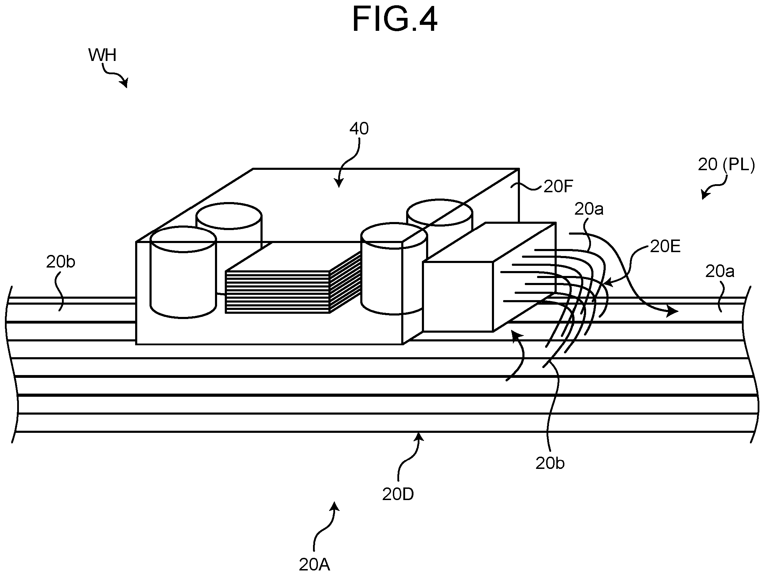

As with the first installation mode, FIG. 4 illustrates an example of an installation mode in which the voltage converter 40 is provided in the middle part 20A of the power supply wire 20, and the installation structure thereof is different from that of the first installation mode. Specifically, as with the first installation mode, the voltage converter 40 illustrated in FIG. 4 is provided in the middle part 20A, of the power supply wire 20, located between a terminal on the side of the 48 V battery B2 and the 48 V power supply distribution BOX 30 and a terminal on the second device D2 side. The power supply wire 20 illustrated in FIG. 4 includes a trunk wire 20D, a branch wire 20E branching off of the trunk wire 20D, and a terminal connector 20F provided in a terminal of the branch wire 20E. The terminal connector 20F has, for example, an internal circuit configured with a circuit body such as a bus bar inside the housing, and electrically connects specific branch wires of the plurality of branch wires 20E via the internal circuit. The terminal connector 20F is sometimes referred to as, for example, a joint connector or a junction connector. The voltage converter 40 illustrated in FIG. 4 is built in the terminal connector (joint connector) 20F. With this configuration, the voltage converter 40 can be provided in the middle part 20A of the power supply wire 20. In this case, the terminal connector 20F containing the voltage converter 40 therein may be fixed to the vehicle by a fixing tool or the like, or may be bundled and fixed together with the trunk wire 20D and the branch wire 20E by a binding member or the like. The voltage converter 40 converts the power supplied at the first voltage V1 via the trunk wire 20D and a part of the branch wires 20E from the side of the 48 V battery B2 and the 48 V power supply distribution BOX 30 into the second voltage V2 lower than the first voltage V1, outputs the second voltage V2 to another branch wire 20E, and supplies the power at the second voltage V2 to the second device D2 again via the trunk wire 20D.

In this case also, in the power supply wire 20, typically, among the trunk wire 20D and the branch wire 20E, the part 20a that has a relatively low voltage and is closer to the second device D2 side with respect to the voltage converter 40 is configured to be relatively thick, and the part 20b that has a relatively high voltage and is closer to the side of the 48 V battery B2 and the 48 V power supply distribution BOX 30 with respect to the voltage converter 40 is configured to be relatively thin.

### <Third Installation Mode>

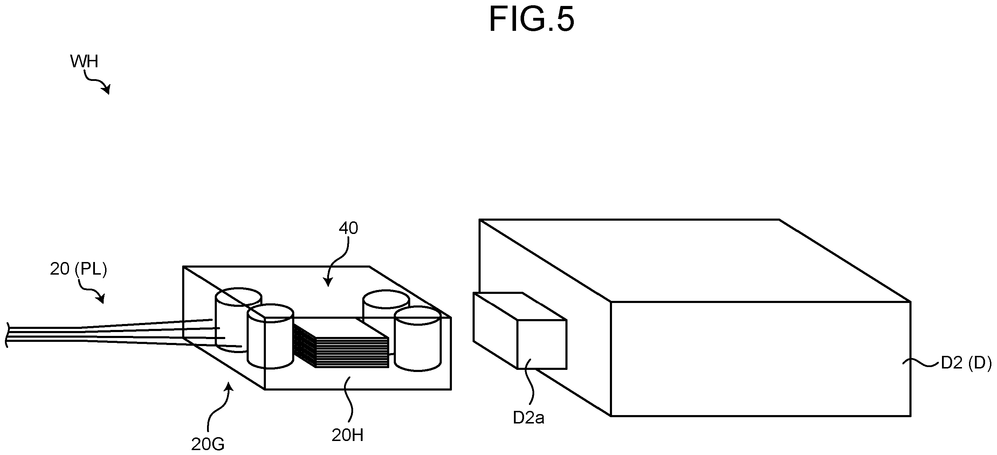

FIG. 5 illustrates an example of an installation mode different from the first and second installation modes in that the voltage converter 40 is provided in a terminal 20G on the second device D2 side of the power supply wire 20. Specifically, unlike the first and second installation modes, the voltage converter 40 illustrated in FIG. 5 is provided in the terminal 20G located on the second device D2 side in the power supply wire 20. More specifically, the power supply wire 20 illustrated in FIG. 5 includes a device connector 20H that is provided in the terminal 20G on the second device D2 side and is connected to a connector D2a of the second device D2. The voltage converter 40 illustrated in FIG. 5 is built in the device connector 20H. With this configuration, the voltage converter 40 can be provided in the terminal 20G on the second device D2 side of the power supply wire 20. The voltage converter 40 converts the power supplied at the first voltage V1 via the power supply wire 20 from the side of the 48 V battery B2 and the 48 V power supply distribution BOX 30 into the second voltage V2 lower than the first voltage V1, directly outputs the second voltage V2 to the second device D2 itself to thereby supply power at the second voltage V2 to the second device D2.

In this case, the entire power supply wire 20 can be used as a supply wire corresponding to a voltage of 48 V corresponding to the first voltage V1, and it is not necessary to use a supply wire corresponding to a voltage of 12 V corresponding to the second voltage V2. That is, in this case, it is possible to use a relatively thin supply wire corresponding to a relatively high voltage over the entire power supply wire 20.

### <Fourth Installation Mode>

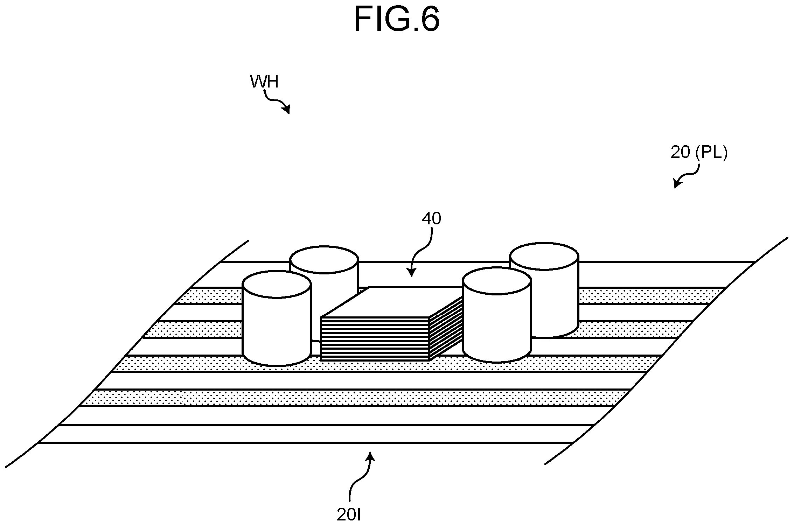

FIG. 6 illustrates an example of an installation mode for a case where the power supply wire 20 includes a planar circuit body 20I. The planar circuit body 20I exemplified in FIG. 6 is a circuit body in which a circuit is configured in a planar shape, and has flexibility. As described above, the planar circuit body 20I is configured with, for example, an FPC, an FFC, or the like. The voltage converter 40 illustrated in FIG. 6 is mounted as a component on the planar circuit body 20I. In this case, the voltage converter 40 converts the power supplied at the first voltage V1 via a partial circuit of the planar circuit body 20I from the side of the 48 V battery B2 and the 48 V power supply distribution BOX 30 into the second voltage V2 lower than the first voltage V1, outputs the second voltage V2 to another circuit of the planar circuit body 20I, and supplies the power at the second voltage V2 to the second device D2.

In the wire harness WH described above, the voltage converter 40 is provided in the power supply wire 20 that supplies the power from the 48 V battery B2 to the device D. Thus, in the power supply wire 20, the power after voltage conversion by the voltage converter 40 can be supplied to the device D. With this configuration, the wire harness WH can supply power from the 48 V battery B2 to the first device D1 that is the 48 V drive device, and can also achieve power supply from that 48 V battery B2 to the second device D2 that is the 12 V drive device. As a result, the wire harness WH can appropriately distribute and supply power to the first device D1 and the second device D2 with different drive voltages from each other.

In addition, the wire harness WH can perform, for the second device D2, voltage conversion from the first voltage V1 to the second voltage V2 in the vicinity of the second device D2 to thereby achieve efficient routing.

As described above, the wire harness WH can appropriately supply power to the various devices D mounted on the vehicle V even in a situation where the devices D with different drive voltages coexist.

More specifically, in the wire harness WH described above, the power supplied from the 48 V battery B2 at the first voltage V1 is converted into the second voltage V2 lower than the first voltage V1 by the voltage converter 40 and the second voltage V2 is output, so that the wire harness WH can supply the power at a voltage of 12 V corresponding to the second voltage V2 to the second device D2 that is the 12 V drive device of the devices D. That is, here, the wire harness WH can supply power at a voltage of 48 V corresponding to the first voltage V1 to the first device D1 that is the 48 V drive device, and supply power at a voltage of 12 V corresponding to the second voltage V2 lower than the first voltage V1 by the voltage converter 40 on the power supply wire 20 to the second device D2 that is the 12 V drive device. In this case, as described above, the voltage converter 40 is provided on the power supply wire 20, so that the voltage conversion from the first voltage V1 to the second voltage V2 can be performed for the second device D2 in the vicinity of the second device D2. Thus, in the power supply wire 20, the supply wire corresponding to a voltage of 12 V, which corresponds to the second voltage V2, can be reduced as much as possible. That is, in the wire harness WH, the supply wire that corresponds to a relatively low voltage and is relatively thick can be reduced as much as possible. As a result, in the wire harness WH, for example, the supply wire whose wire diameter is relatively large, whose weight tends to be large, and which corresponds to the second voltage V2 can be shortened as much as possible to enhance the routing efficiency. This prevents the weight of the entire wire harness WH from being increased. Further, for example, even in a case where the first device D1 and the second device D2 coexist as the device D mounted on the vehicle V and the ratio therebetween varies depending on the vehicle type and the age, the wire harness WH can be flexibly adapted to the case with the design change minimized.

Here, in the wire harness WH described above, for example, the voltage converter 40 can be provided in the middle part 20A of the power supply wire 20. Thus, in the wire harness WH, the voltage converter 40 can be provided on the power supply wire 20.

In this case, in the wire harness WH described above, for example, the voltage converter 40 may be built in the relay connector 20C that connects the plurality of electric wires 20B to each other in the power supply wire 20. Thus, in the wire harness WH, the voltage converter 40 can be easily provided in the middle part 20A of the power supply wire 20.

As another example, in the wire harness WH described above, for example, the voltage converter 40 may be built in the terminal connector (joint connector) 20F provided in the terminal of the branch wire 20E branching off of the trunk wire 20D in the power supply wire 20. In this case also, in the wire harness WH, the voltage converter 40 can be easily provided in the middle part 20A of the power supply wire 20.

In this case, in the wire harness WH described above, the part 20a closer to the second device D2 side with respect to the voltage converter 40 is configured to be thicker than the part 20b closer to the side of the 48 V battery B2 and the 48 V power supply distribution BOX 30 with respect to the voltage converter 40 in the power supply wire 20. With such a configuration, in the wire harness WH, voltage conversion from the first voltage V1 to the second voltage V2 can be performed, for the second device D2, in the vicinity of the second device D2 as described above. As a result, in the wire harness WH, as described above, the supply wire whose wire diameter is relatively large, whose weight tends to be large, and which corresponds to the second voltage V2 can be shortened as much as possible to enhance the routing efficiency. This prevents the weight of the entire wire harness WH from being increased.

On the other hand, in the wire harness WH described above, for example, the voltage converter 40 can be provided in the terminal 20G on the second device D2 side of the power supply wire 20. In this case, the wire harness WH can have a configuration in which the voltage converter 40 is provided on the power supply wire 20 and the supply wire itself whose wire diameter is relatively large, whose weight tends to be large, and which corresponds to the second voltage V2 is not used. This can contribute to further weight reduction.

In this case, in the wire harness WH described above, for example, the voltage converter 40 may be built in the device connector 20H that is provided in the terminal 20G on the second device D2 side in the power supply wire 20. Thus, in the wire harness WH, the voltage converter 40 can be easily provided in the terminal 20G on the second device D2 side of the power supply wire 20.

In the wire harness WH described above, for example, the voltage converter 40 may be mounted as a component on the flexible planar circuit body 20I. Thus, in the wire harness WH, the voltage converter 40 can be easily provided on the power supply wire 20.

Note that the wire harness according to the embodiment of the present invention described above is not limited to the embodiment described above, and various modifications can be made thereto within the scope described in the claims.

In the above description, the voltage converter 40 is provided in the power supply wire 20 that connects the 48 V power supply distribution BOX 30 to the second device D2 in order to perform voltage conversion from the first voltage V1 to the second voltage V2 in the vicinity of the second device D2, but the present invention is not limited thereto. For example, the voltage converter 40 may be provided in a power supply wire (not illustrated) branching off on the 48 V battery B2 side of the 48 V power supply distribution BOX 30 and reaching the second device D2.

In the above description, in the wire harness WH, one voltage converter 40 is provided for one second device D2. However, the present invention is not limited thereto. The wire harness WH may include, for example, a 12 V power supply distribution BOX for distributing power at the second voltage V2 to the plurality of second devices D2 on the second device D2 side of the voltage converter 40 in the power supply wire 20.

In the above description, the voltage converter 40 converts the voltage of the power supplied from the 48 V battery B2 into the second voltage V2 lower than the first voltage V1 to output the second voltage V2 in order to supply power to the second device D2 that is the 12 V drive device. However, the present invention is not limited thereto. For example, the voltage converter may convert the voltage of the power supplied from the 48 V battery B2 into a voltage higher than the first voltage V1 to output the resultant in order to supply power to another device D.

The wire harness according to the present embodiment may be configured by appropriately combining the constituent elements of the embodiment and the modifications described above.

The wire harness according to the present embodiment exhibits an advantageous effect of appropriately supplying power to various devices mounted on a vehicle.

## Claims

1. A wire harness (WH) comprising:
a power supply wire (20) that supplies power from a power supply (B2) mounted on a vehicle (V) to a device (D, D2) mounted on the vehicle (V); and
a voltage converter (40) that is provided in the power supply wire (20) and converts a voltage of the power supplied from the power supply (B2) to output a resultant.

2. The wire harness (WH) according to claim 1, wherein
the power supply (B2) is capable of supplying power at a first voltage (V1), and
the voltage converter (40) converts the voltage of the power supplied from the power supply (B2) into a second voltage (V2) lower than the first voltage (V1) to output a resultant.

3. The wire harness (WH) according to claim 1 or 2, wherein
the voltage converter (40) is provided in a middle part (20A), in the power supply wire (20), located between a terminal on a side of the power supply (B2) and a terminal on a side of the device (D, D2).

4. The wire harness (WH) according to claim 1 or 2, wherein
the voltage converter (40) is provided in a terminal (20G) on side of the device (D, D2) in the power supply wire (20).

5. The wire harness (WH) according to claim 1 or 2, wherein
the power supply wire (20) includes a plurality of electric wires (20B) and a relay connector (20C) that connects the plurality of electric wires (20B) to each other, and
the voltage converter (40) is built in the relay connector (20C).

6. The wire harness (WH) according to claim 1 or 2, wherein
the power supply wire (20) includes a trunk wire (20D), a branch wire (20E) branching off of the trunk wire (20D), and a terminal connector (20R) provided in a terminal of the branch wire (20E), and
the voltage converter (40) is built in the terminal connector (20F).

7. The wire harness (WH) according to claim 1 or 2, wherein
the power supply wire (20) includes a device connector (20H) that is provided in a terminal on the side of the device (D, D2) and is connected to the device (D, D2), and
the voltage converter (40) is built in the device connector (20H).

8. The wire harness (WH) according to claim 1 or 2, wherein
the power supply wire (20) includes a planar circuit body (20I) having flexibility, and
the voltage converter (40) is mounted as a component on the planar circuit body (20I).

9. The wire harness (WH) according to claim 2, wherein
the power supply wire (20) at a part (20a) closer to the device (D, 2D) with respect to the voltage converter (40) is thicker than the power supply wire (20) at a part (20b) closer to the power supply (B2) with respect to the voltage converter (40).
